# EUROPÄISCHE PATENTSCHRIFT

(11) **EP 1 912 045 B1**
(45) Veröffentlichungstag und Bekanntmachung des Hinweises auf die Patenterteilung: **01.08.2012**
(21) Anmeldenummer: 07019432.9
(22) Anmeldetag: 04.10.2007
(51) Int. Cl.: G01F 23/288, G01T 1/20

(54) **Vorrichtung zum Messen ionisierender Strahlung**
Device for measuring ionising radiation
Dispositif de mesure d'un rayonnement ionisant

(30) Priorität: 12.10.2006 DE 102006048266
(43) Veröffentlichungstag der Anmeldung: 16.04.2008
(73) Patentinhaber: Berthold Technologies GmbH & Co. KG, 75323 Bad Wildbad (DE)
(72) Erfinder: Mörmann, Dirk, Dr., 76476 Bischweier (DE); Hirsch, Stephan, 68239 Mannheim (DE); Freiburger, Ewald, 75245 Neulingen (DE)
(74) Vertreter: Frank, Gerhard

(56) Entgegenhaltungen:
- EP-A- 0 982 602
- WO-A-01/81950
- DE-U1- 20 103 881

## Beschreibung

### Technischer Hintergrund

Die Erfindung betrifft eine Vorrichtung zum Messen ionisierender Strahlung, insbesondere für radiometrische Füllstandsmessungen, entsprechend dem Oberbegriff des Patentanspruchs 1.

Für radiometrische Füllstandsmessungen werden vorrangig Detektoren mit langen organischen Szintillatoren eingesetzt, die an einem Ende an einen Photomultiplier gekoppelt sind. Die empfindliche Länge solcher Detektoren ist durch den Hersteller des Szintillatormaterials und praktische Gesichtspunkte (Fertigung, Transport, Montage) auf ca. 2 m begrenzt. Sind bei radiometrischen Füllstandsmessungen Messbereiche >2 m gefordert, werden üblicherweise mehrere identische Detektoren über den Messbereich verteilt und in Reihe geschaltet. Die Zählraten der einzelnen Detektoren werden aufsummiert und anhand der Kalibirierung der Füllstand bestimmt. Nachteilig an diesem Vorgehen erweisen sich die hohen Kosten, da für jeden Detektor eine eigene Verstärkerelektronik und Auswerteeinheit (Photomultiplier, Verstärkerschaltungen, Digitalteil, Busanbindung) vorzusehen ist. Des Weiteren müssen die Detektoren einzeln an Versorgungs- und Signalleitungen angeschlossen werden.

Im gattungsbildenenden Gebrauchsmuster DE 201 03 881 U1 wird ein Stabdetektor beschrieben, bei dem der empfindliche Teil aus mehreren Szintillatorstäben besteht, die aufeinander gesetzt und optisch gekoppelt sind und an einem Ende von einem einzigen Photomultiplier ausgelesen werden. Der Vorteil eines solchen Detektors liegt zum einen in der deutlichen Kostenreduzierung durch Einsparung von Messelektroniken und Verkabelung und zum weiteren durch verringerte Bauelemente Anzahl eine geringere Ausfallwahrscheinlichkeit des Gesamtmesssysterns (FMEA-Ausfallzahl). In dieser Weise lassen sich große Messbereiche abdecken bei gleichzeitig hoher Empfindlichkeit und Linearität. Allerdings kann die Verbindung der Szintillatorstäbe erst an der Einsatzstelle erfolgen. Die einzelnen Szintillatorstäbe müssen vor Ort gegeneinander ausgerichtet, optisch gekoppelt und in einem Schutzrohr untergebracht werden. Dieses Vorgehen ist angesichts der Anfälligkeit des Szintillatormaterials gegenüber Verschmutzung und mechanischer Beschädigung und den oft schwierigen Bedingungen am Einsatzort problematisch.

Aus der EP 0 982 602 A2 ist ein Messgerät bekannt, welches aus einem Szintillatormodul und einem Elektronikmodul besteht. Das Szintillatormodul weist hierbei ein Gehäuse in Form eines Hüllelements und einen in diesem Hüllelement angeordneten stabförmigen Szintillator auf. Zwischen einer Stirnseite des stabförmigen Szintillators und einer Stirnseite des Hüllelements sind Federn angeordnet, welche den stabförmigen Szintillator gegen ein starr mit dem Hüllelement verbundenes Fenster drücken. An dieses Fenster schließt sich ein Photomultiplier des Elektronikmoduls an.

In der WO 2001/81950 A1 ist eine Szintillatoreinrichtung beschrieben, bei der jeweils ein stabförmiges Szintillatorelement in einem Hüllelement gehalten ist. Die optische Kopplung zwischen den Stirnseiten von benachbarten Szintillatorelemeneten erfolgt über ein Gel oder dergleichen.

### Beschreibung der Erfindung

Aufgabe der Erfindung ist es, eine Vorrichtung zum Messen ionisierender Strahlung mit einem aus mindestens zwei stabförmigen Szintillatorelementen bestehenden Szintillator zu schaffen, bei der eine möglichst einfache und zuverlässige Handhabung und Montage der Messvorrichtung am Einsatzort gegeben ist.

Diese Aufgabe wird mit den Merkmalen des Patentanspruchs 1 gelöst.

Der Grundgedanke der Erfindung besteht darin, die einzelnen Szintillatorstäbe mittels "passender" Hüllelemente und Fensterelemente als stirnseitigen Abschluss zu gekapselten Szintillatormodulen zusammenzufassen.

Ein Szintillatormodul besteht somit aus einem Szintillatorstab, der an beiden Enden durch Fenster abgeschlossen ist, durch die das Szintillatorlicht in das nächste Modul gelangen kann, sowie einem passenden Hüllelement.

Vor Ort werden bis zur gewünschten Messlänge mehrere solcher Szintillatormodule miteinander verbunden und an mindestens einem Ende mit einem Detektormodul, bestehend aus einem Szintillatorelement, Photomultiplier und Auswerteelektronik, abgeschlossen.

Eine weitere Aufgabe der Erfindung besteht darin, trotz des großen Messbereichs eine hohe Nachweisempfindlichkeit für ioniseierende Strahlung zu erreichen.

Diese Aufgabe wird mit den Merkmalen des Patentanspruchs 11 gelöst.

Weitere Ausgestaltungen sind den Unteransprüchen zu entnehmen.

### Kurze Darstellung der Zeichnungen

Ein bevorzugtes Ausführungsbeispiel der Erfindung wird nun anhand von Zeichnungen näher erläutert, es zeigen:
- Figur 1:: Einen Längsschnitt durch einen Szintillatormodul,
- Figur 2:: einen Längsschnitt durch die Kopplungsstelle zweier Szintillatormodule nach Figur 1,
- Figur 3:: eine Explosionsdarstellung des Kopplungsbereiches eines Szintillatormoduls,
- Figur 4:: einen Längsschnitt durch den ersten Endbereich mit angekoppeltem Detektormodul,
- Figur 5:: einen Längsschnitt durch den zweiten Endbereich mit angekoppeltem Abschlussmodul,
- Figur 6:: Ansicht und Querschnitt einer Gesamtanordnung besteht aus Abschlussmodul, Szintillatormodul und Detektormodul, und
- Figur 7:: ein Beispiel einer Messanordnung mit einem Blockschaltbild der Auswerteschaltung des Detektormoduls.

### Beschreibung des Ausführungsbeispiels

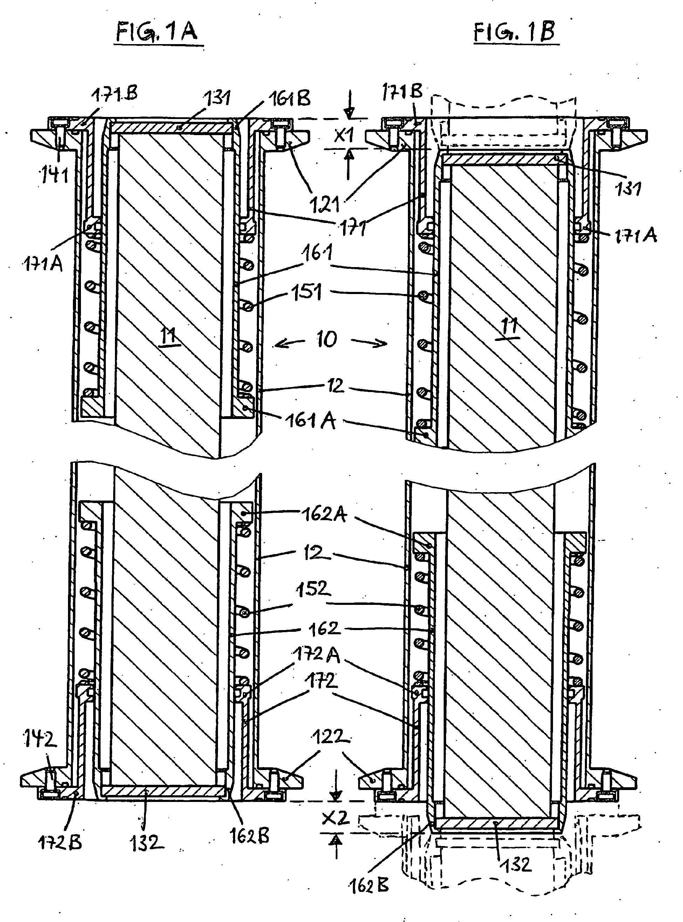

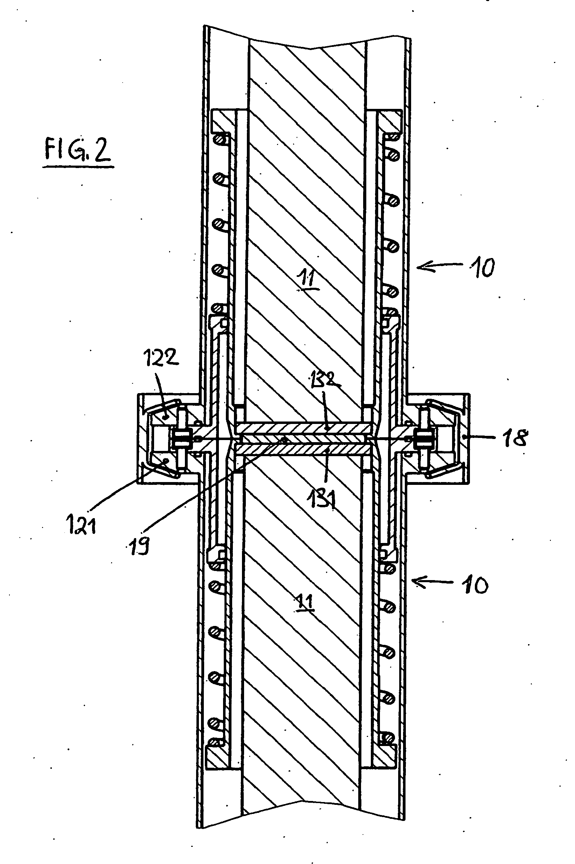

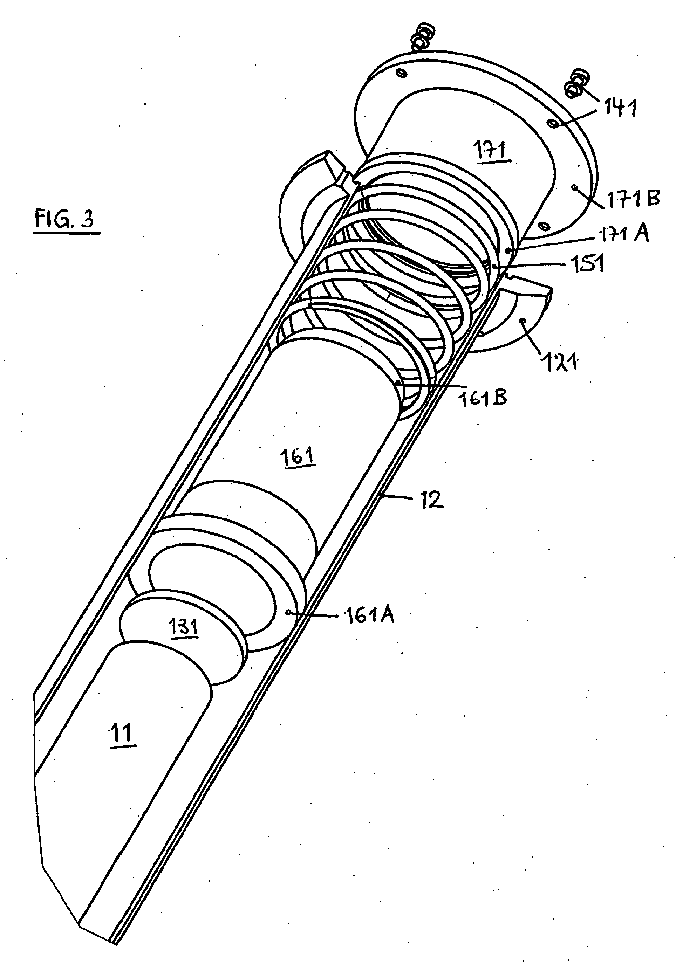

Das in den Figuren 1-3 dargestellte Szintillatormodul 10 bildet das Basismodul einer Messvorrichtung.

Aufgabe eines Szintillatormoduls ist die sichere Kapselung des Szintillatorelements und Schutz desselben vor Beschädigung, Verschmutzung und Streulicht. Dies wird durch eine robuste Hülle aus Edelstahl erreicht, die das Szintillatorelement umgibt. An beiden Enden des Szintillatormoduls angebrachte Federn garantieren eine zuverlässige optische Kopplung des Szintillatorelements an stirnseitig abschließende Fensterelemente und stellen sicher, dass unterschiedliche Maßänderungen von Hüllelement und Szintillatorelement, verursacht durch thermische Längenausdehnung und Maßtoleranzen, ausgeglichen werden. Die Position des Szintillatorelements innerhalb des Hüllelements kann um mehrere Zentimeter in beide Richtungen verschoben werden, ohne dass seine Kopplung mit dem benachbarten Szintillatorelement oder seine dichte Kapselung gefährdet wäre.

Der Aufbau eines Szintillatormoduls wird nun anhand der Figuren 1 bis 3 näher erläutert:

Ein im Inneren des Szintillatormoduls 10 zentral gelagertes, stabförmiges Szintillatorelement 11 ist an seinen beiden Enden jeweils koaxial von einem Innenzylinder 161,162, einem Außenzylinder 171,172 und einem mit letzterem verbundenen, gemeinsamen Hüllelement 12 umgeben.

Auf Ringflanschen 161B,162B der Innenzylinder 161,162 sind Fensterelemente 131,132 gehalten, die nahtlos an die beiden Stirnseiten des Szintillatorelementes 11 anschließen. An seinem anderen Ende weist jeder der Innenzylinder 161,162 einen Ringflansch 161A,162A auf, der das erste Gegenlager eines Federelementes 151,152 bildet, dessen anderes Ende auf einem auf dem Innenzylinder 161,162 gleitenden Ringflansch 171A,172A des Außenzylinders 171,172 als zweites Gegenlager aufsitzt. Durch die zwischen den beiden Ringflanschen 161B,162B und 171B,172B wirkenden Federelemente 151,152 ist eine Längenänderung der Baueinheit Szintillatorelement 11/Innenzylinder 161,162 gegenüber dem Bauelement Außenzylinder 171,172/Hüllelement 12 möglich, die durch die Druckwirkung der Federelemente 151,152 sicherstellt, dass eine Relativverschiebung der ersten Baueinheit gegenüber der zweiten Baueinheit ermöglicht wird, ohne dass der Kontakt benachbarter Fensterelemente 131,132 verloren geht:

Figur 1 A zeigt die Positionierung der beiden Baueinheiten bei einer Normtemperatur, Figur 1 B die entsprechende Positionierung der beiden Baueinheiten bei einer Temperatur, bei der die Längenausdehnung der Hüllelemente 12 der Anordnung der Szintillatormodule 10 geringer ist als die Längenausdehnung der Szintillatorelemente 11, so dass es zu einem Versatz X1,X2 der äußeren Stirnseiten der Fensterelemente 131,132 gegenüber der äußeren Ringfläche des zweiten Ringflansches des Außenzylinders 171,172 mit x2 > x1 kommt, der Kontakt zwischen den Fensterelementen 131,132 mit den Fensterelementen der Szintillatormodule 10 (gestrichelt dargestellt) aber aufrecht erhalten wird.

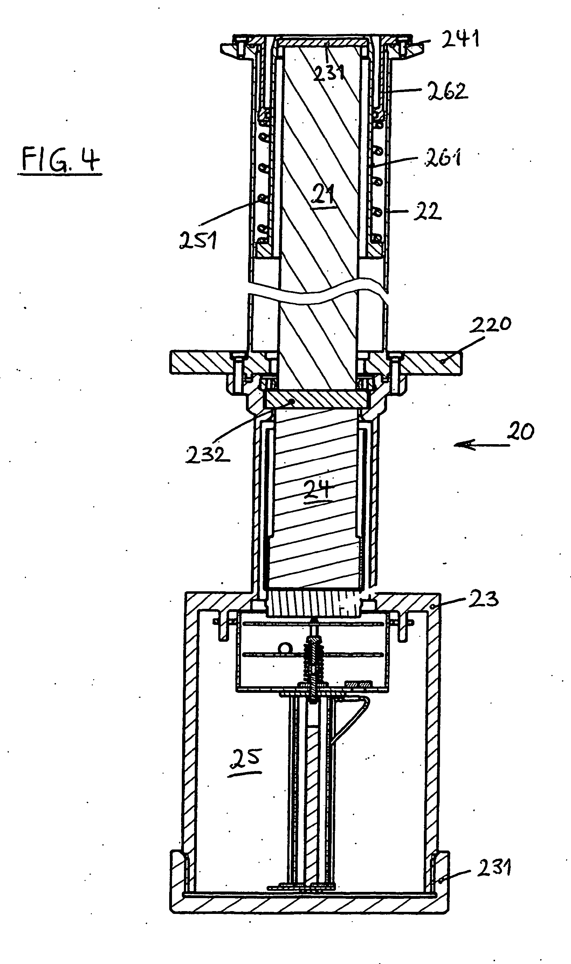

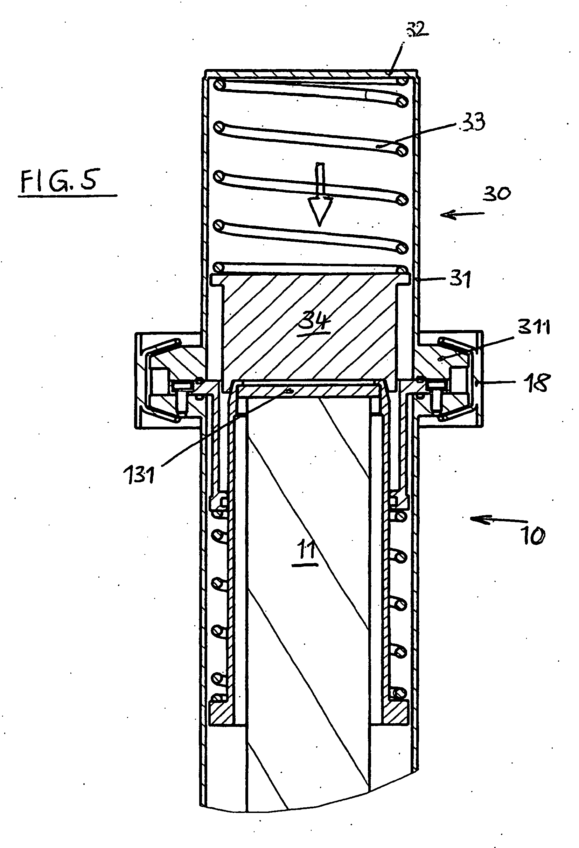

Beim dargestellten Ausführungsbeispiel zeigt das in der Figur 1 B obere Ende des Szintillatormoduls zum Detektormodul 20 hin (Figur 4), an dessen Kontaktstelle mit dem ersten Szintillatormodul 10 keine Verschiebung auftritt (feste Kopplung an dessen Fensterelement 231); das untere Ende des Szintillatormoduls zeigt zum Abschlussmodul 30 (Figur 5) hin. Eine bei Verwendung von N Szintillatormodulen auftretende Gesamtlängendifferenz N*(x2 - x1) wird durch "Einschieben" des "letzten" Szintillatorelements 11 in das Gehäuse 31 des Abschlussmoduls 30 gegen die Kraft der Druckfeder 33 kompensiert.

Die derart ausgestatteten Szintillatormodule 10 werden über einen Profilring 18 miteinander verbunden, wobei zwischen den einander gegenüberliegenden Fensterelementen 131,132 ein Kopplungselement 19 beispielsweise in Form einer Silikonplatte eingelegt ist, das den optischen Kontakt zwischen Fensterelementen aufrecht erhält.

Dichtelemente in den Flanschen 171B,172B sorgen dafür, dass kein Licht oder Feuchtigkeit in den Innenraum des Hüllelementes 12 eindringen kann.

Das in Figur 4 dargestellte Detektormodul 20 ist an einem Ende identisch zu den Szintillatormodulen 10 aufgebaut, d.h., ein Szintillatorelement 21 ist optisch an ein für Szintillationslicht transparentes Fensterelement 231 angekoppelt und ein Federelement 251 erlaubt eine Längenänderung des Szintillatorelements 21 gegenüber dem Hüllelement 22. Auf der dem Fensterelement 231 gegenüberliegenden Seite befinden sich ein über ein Detektorfenster 232 an das Szintillatorelement 21 gekoppelter Photomultiplier 24 und eine Auswerteschaltung 25, die das Szintillationslicht in elektronische Pulse umwandeln.

Das dem Detektormodul 20 abgewandte Modul bildet ein Abschlussmodul 30 (Figur 5). Dessen Gehäuse ist mit einem Deckel 32 verschlossen. Im Gehäuse 31 ist eine Druckfeder 33 gehalten, deren eines Ende sich am Deckel 32 abstützt und deren anderes Ende ein Reflektorelement 34 an das benachbarte Fensterelement 131 des angrenzenden Szintillatormoduls 10 drückt, so dass Szintillationslicht von der reflektierenden Endfläche des Reflektorelements 34 wieder in das Szintillatorelement 11 zurückgeworfen wird.

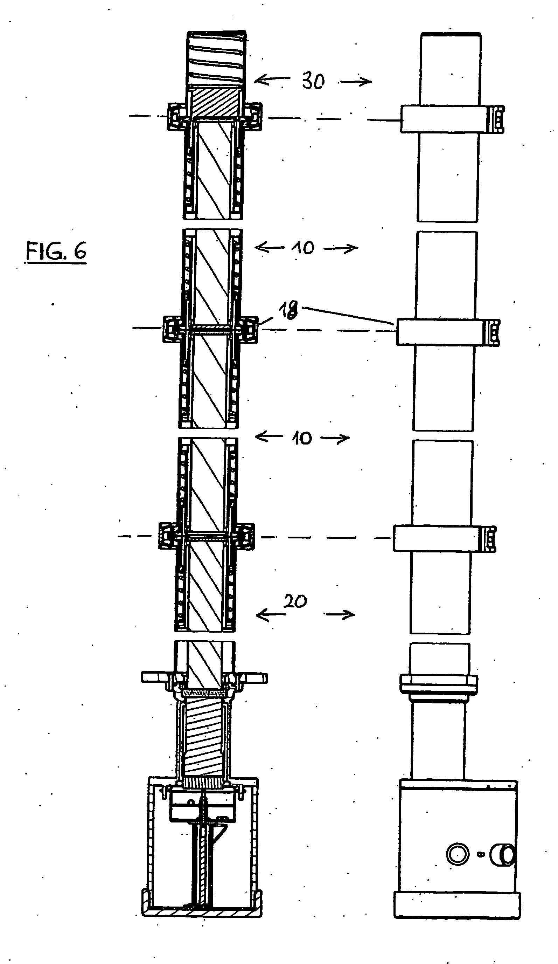

Szintillatormodule, Detektormodul und Abschlussmodul werden am Einsatzort mechanisch über die Profilringe 18 und optisch über die Kopplungeselemente 19 miteinander einfach und schnell verbunden (Figur 6). Wie oben erläutert, sorgen die Federlemente in den einzelnen Modulen dafür, dass Längenänderungen, die durch Temperaturschwankungen von mindestens +/-40°C entstehen, ausgeglichen werden können und gleichzeitig der optische Kontakt der einzelnen Elemente untereinander erhalten bleibt.

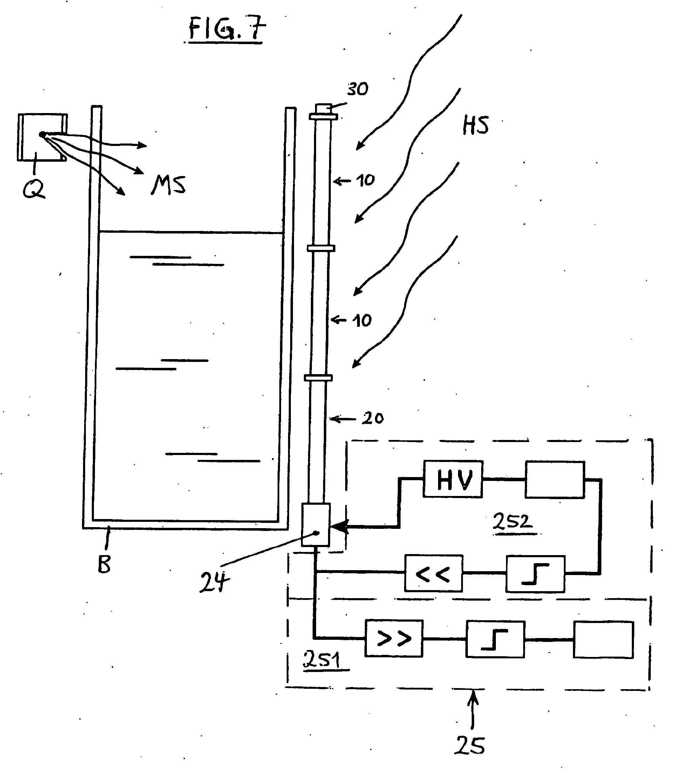

Figur 7 zeigt eine Gesamtanordnung der Messvorrichtung im Einsatz zur Füllstandsmessung in einem Behälter B mit 6 m Messbereich.

Eine radioaktive Quelle Q sendet Messstrahlung MS aus, die den Behälter B durchdringt und dabei von dem sich im Behälter befindlichen Messgut abgeschwächt wird. Die Strahlung wird auf der der Quelle gegenüberliegenden Seite von der erfindungsgemäßen Vorrichtung registriert. Diese besteht hier aus einem Detektormodul 20 von 2m Länge und zwei Szintillatormodulen von jeweils 2m Länge und somit einer Gesamtlänge von 6m. Die in den Szintillatorelementen entstehenden Lichtblitze werden vom Photomultiplier 24 im Detektormodul 20 registriert, in ein elektronisches Signal umgewandelt, und von der Auswerteschaltung 25 verarbeitet, um den aktuellen Füllstand aus der Zählrate zu ermitteln.

Die große, quasi-kontinuierliche Länge des Detektors stellt eine Herausforderung an die Dynamik der elektronischen Verstärkerschaltung dar, wie sie von den bisher eingesetzten Detektoren nicht bekannt ist. Um eine hohe Empfindlichkeit des Detektors zu erreichen, sollen einerseits noch sehr schwache "Szintillationslichtblitze" nachgewiesen werden, wie sie durch Comptonstreuung im Szintillatormaterial entstehen. Findet dies in großer Entfernung vom Photomultiplier statt, erfährt das erzeugte Licht durch die Leitung in den Szintillatorelementen und an den optischen Kopplungsstellen eine deutliche Schwächung und löst daher an der Photokathode des Photomultipliers nur noch wenige Elektronen aus.

Andererseits wird durch Müonen oder kosmische Höhenstrahlung HS, die bis zu 6 m Szintillatorlänge durchlaufen, sehr viel Szintillationslicht erzeugt, wodurch die resultierenden Spannungspulse an der Anode des Photomultipliers sehr hohe Werte erreichen können.

Figur 7 zeigt auch ein Blockschaltbild der Auswerteschaltung 25, mit der diese Probleme überwunden werden:

Um ein Übersteuern der Elektronik zu verhindern, andererseits aber auch noch schwaches Szintillationslicht nachweisen zu können, werden von der Anode des Photomultipliers 24 aus die Signale auf zwei voneinander unabhängige Kanäle aufgeteilt:

Ein Messkanal 251 ist auf die Signalverarbeitung der Pulse, die für die Messung maßgeblich sind, optimiert und weist eine elektronische Verstärkung von ca. 30 auf. Am Eingang des Messkanals 251 wird die Pulshöhe durch eine geeignete Diodenschaltung begrenzt, um Übersteuerungseffekte zu verhindern.

Ein zweiter, für die automatische Hochspannungsregelung verantwortliche Regelkanal 252, weist einen Spannungsteiler auf, der die Pulshöhe am Eingang um ca. einen Faktor 5-10 herabsetzt. Der Regelkanal 252 besitzt keine Verstärkung, sondern dient lediglich der Pulsformung und Pufferung.

Damit ist gewährleistet, dass der erforderliche Dynamikbereich unter allen Betriebsbedingungen eingehalten wird. Die Regelung der Hochspannung HV zum Ausgleich von Alterungs- und Temperatureffekten benutzt ein Verfahren, wie es beispielsweise aus der DE 41 14 030 C1 bekannt ist.

### Bezugszeichen

- Szintillatormodul: 10
- Szintillatorelement: 11
- Hüllelement: 12
- Endflansch: 121,122
- Fensterelemente: 131,132
- Halteelemente: 141,142, 241
- Federelement: 151,152
- Innenzylinder: 161,162
- Außenzylinder: 171,172
- erster Ringflansch: 161A,162A; 171A,172A
- zweiter Ringflansch: 161B,162B; 171B,172B
- Profilring: 18
- Kopplungselement: 19
- Detektormodul: 20
- Szintillatorelement: 21
- Hüllelement: 22
- Endflansch: 220
- Innenzylinder: 261
- Außenzylinder: 262
- Fensterelement: 231
- Detektorfenster: 232
- Federelement: 251
- Gehäuse: 23
- Deckel: 231
- Photomultiplier: 24
- Auswerteschaltung: 25
- Messkanal: 251
- Regelkanal: 252
- Abschlussmodul: 30
- Gehäuse: 31
- Flansch: 311
- Deckel: 32
- Druckfeder: 33
- Reflektorelement: 34

## Patentansprüche

1. Vorrichtung zum Messen ionisierender Strahlung mit einem Szintillator, der eine erste Anordnung von mindestens zwei stabförmigen Szintillatorelementen (11) enthält, die über ihre gegenüberliegenden Stirnflächen optisch miteinander koppelbar sind, wobei die erste Anordnung von Szintillatorelementen (11) koaxial von einer zweiten Anordnung von miteinander verbindbarren Hüllelementen (12) umschlossen ist,
**dadurch gekennzeichnet, dass** jeweils ein Szintillatorelement (11) und ein Hüllelement (12) und zwei stirnseitige Fensterelemente (131,132) ein Szintillatormodul (10) bilden, das mit weiteren Szintillatormodulen optisch und mechansich verbindbar ist, wobei die Fensterelemente (131, 132)
jeweils nahtlos an die Stirnseiten des Szintillatorelements (11) des Szintillatormoduls anschließen und das Szintillatorelement (11) gemeinsam mit den Fensterelementen (131,132) gegen die Kraft wenigstens eines koaxial zwischen Szintillatorelement (11) und Hüllelement (12) angeordneten Federelements (151,152) axialverschieblich im Hüllelement (12) gehalten ist.

2. Vorrichtung nach Anspruch 1, **dadurch gekennzeichnet, dass** mindestens eines an einem Ende der Anordnung gelegenes Modul als Detektormodul (20) mit einem Lichtsensor, insbesondere einem Photomultiplier (24) ausgebildet ist.

3. Vorrichtung nach Anspruch 2, **dadurch gekennzeichnet, dass** mindestens eines am anderen Ende der Anordnung gelegenes Modul als Abschlussmodul (30) ausgebildet ist.

4. Vorrichtung nach Anspruch 1, **dadurch gekennzeichnet, dass** das Federelement (151.152) eine Spiralfeder ist, deren Enden sich an Ringflanschen eines Innenzylinders (161,162) und eines Außenzylinders (171,172) abstützen.

5. Vorrichtung nach Anspruch 1 bis 4, **dadurch gekennzeichnet, dass** der Innenzylinder (161,162) einen ersten endseitigen Ringflansch (161B,162B) aufweist, der das Fensterelement (131,132) hält auf dem die Stirnseite des Szintillatorelements (11) aufliegt, und einen zweiten endseitigen Ringflansch (161A,162A), auf dem sich das eine Ende des Federelements (151,152) abstützt.

6. Vorrichtung nach Anspruch 1 bis 4, **dadurch gekennzeichnet, dass** der Außenzylinder (171,172) einen ersten endseitigen Ringflansch (171A,172A) aufweist, an dem sich das andere Ende des Federelements (151,152) abstutzt, und einen zweiten Ringflansch (171B,172B), der mit einem Endflansch (121,122) des Hüllelements (12) mittels Halteelemente (141,142) verbunden, insbesondere verschraubt ist.

7. Vorrichtung nach Anspruch 1, **dadurch gekennzeichnet, dass** zur mechanischen Verbindung randseitig verschließbare Profilringe (18) die Endflansche (121,122) der Hüllelemente (12,22) benachbarter Module formschlüssig übergreifen.

8. Vorrichtung nach Anspruch 1 bis 3, **dadurch gekennzeichnet, dass** zwischen den Fensterelementen (131,132,231) der Szintilatormodule (10) und des Detektormoduls (20) lichtdurchlässige Kopplungselemente (19) eingelegt sind.

9. Vorrichtung nach Anspruch 2, **dadurch gekennzeichnet, dass** das Detektormodul (20) ein Szintillatorelement (21) und ein Hüllelement (22) aufweist, die an einem Ende über ein Federelement (251), einen Innenzylinder (261) und einen Außenzylinder (262) miteinander verbunden sind, wobei das Szintillatorelement (21) an seinem anderen Ende über ein Detektorfenster (232) an den Photomultiplier (24) gekoppelt ist, der zusammen mit einer Auswerteschaltung (25) in einem Gehäuse (23) angeordnet ist, das an einem Endflansch (220) des Hüllelements (22) gehalten ist.

10. Vorrichtung nach Anspruch 3, **dadurch gekennzeichnet, dass** das Abschlussmodul (30) aus einem Gehäuse (31) mit Deckel (32) besteht, das über einen Flansch (311) mittels eines Profilrings (18) mit dem letzten Szintillatormodul (10) der Anordnung verbindbar ist, und dass im Gehäuse (31) eine Druckfeder (33) gehalten ist, die ein Reflektorelement (34) gegen den äußeren Ringflansch (161B) des Innenzylinders (161) des angrenzenden Szintillatormoduls (10) presst.

11. Vorrichtung zum Messen ionisierender Strahlung nach Anspruch 2, **dadurch gekennzeichnet, dass** dem Photomultiplier (24) eine Auswerteschaltung (25) nachgeschaltet ist, die einen Messkanal (251) zur Erfassung, Verarbeitung und Anzeige der Messimpulse und einen Regelkanal (252) zur Impulsformung und Impulspufferung aufweist.

12. Vorrichtung nach Anspruch 11, **dadurch gekennzeichnet, dass** der Messkanal (251) eine elektronische Verstärkung von ca. 30 sowie eine Pulshöhenbegrenzung aufweist

13. Vorrichtung nach Anspruch 11, **dadurch gekennzeichnet, dass** der Regelkanal (252) über einen Spannungsteiler die Pulshöhe um einen Faktor 5-10 herabsetzt und mit diesem Signal die Hochspannungseinheit (HV) des Photomultipliers (24) ansteuert.

## Claims

1. A device for measuring ionising radiation having a scintillator containing a first array of at least two rod-shaped scintillator units (11) which can be optically coupled with each other by their opposite end faces, the first array of scintillator units (11) being enclosed by a second array of interconnectable covering units (12), wherein each of one scintillator unit (11) and one covering unit (12) and two end window elements (131,132) constitute a scintillator module (10) which can be optically and mechanically connected to other scintillator modules, with the window elements (131,132) each seamlessly adjoining the end faces of the scintillator element (11) of the scintillator module and the scintillator unit (11) together with the window elements (131,132) being held in an axially displaceable manner in the covering unit (12) against the force of at least one spring element (151,152) arranged coaxially between scintillator unit (11) and covering unit (12).

2. A device according to claim 1 wherein at least one module positioned at one end of the array is configured as a detector module (20) having a light sensor, in particular a photomultiplier (24).

3. A device according to claim 2 wherein at least one module positioned at the other end of the array is configured as a termination module (30).

4. A device according to claim 1 wherein the spring element (151,152) is a coil spring whose ends are supported on ring flanges of an inner cylinder (161,162) and of an outer cylinder (171,172).

5. A device according to any one of claims 1 to 4 wherein the inner cylinder (161,162) exhibits a first end ring flange (161B,162B) which holds the window element (131,132) on which the end face of the scintillator unit (11) lies, and a second end ring flange (161A,162A), on which the one end of the spring element (151, 152) is supported.

6. A device according to any one of claims 1 to 4 wherein the outer cylinder (171,172) exhibits a first end ring flange (171A,172A) on which the other end of the spring element (151,152) is supported, and a second ring flange (171B,172B) which is connected, in particular screw-fastened, to an end flange (121,122) of the covering unit (12) by way of holding elements (141,142).

7. A device according to claim 1 wherein for the mechanical connection, profile rings (18) that can be locked at the edge grip over the end flanges (121,122) of the covering units (12,22) of adjacent modules in a form-fit manner.

8. A device according to any one of claims 1 to 3 wherein translucent coupling elements (19) are inserted between the window elements (131,132,231) of the scintillator modules (10) and of the detector module (20).

9. A device according to claim 2 wherein the detector module (20) exhibits a scintillator unit (21) and a covering unit (22) which are interconnected at one end by a spring element (251), an inner cylinder (261) and an outer cylinder (262), the scintillator unit (21) being coupled at its other end by a detector window (232) to the photomultiplier (24) which together with an evaluation circuit (25) is arranged in a housing (23) held on an end flange (220) of the covering unit (22).

10. A device according to claim 3 wherein the termination module (30) consists of a housing (31) with cover (32) and which is connectable with a flange (311) by way of a profile ring (18) to the last scintillator module (10) of the array, and wherein a compression spring (33) held in the housing (31) presses a reflector element (34) against the outer ring flange (161B) of the inner cylinder (161) of the adjacent scintillator module (10).

11. A device for measuring ionising radiation according to claim 2 wherein downstream of the photomultiplier (24) there is connected an evaluation circuit (25) which exhibits a measuring channel (251) for measuring, processing and displaying the measured pulses and a control channel (252) for pulse forming and pulse buffering.

12. A device according to claim 11 wherein the measuring channel (251) exhibits an electronic amplification of approximately 30 as well as a pulse height limiter.

13. A device according to claim 11 wherein the control channel (252) reduces the pulse height by a factor of 5-10 by way of a voltage divider and triggers the high-voltage unit (HV) of the photomultiplier (24) with this signal.

## Revendications

1. Dispositif de mesure d'un rayonnement ionisant comprenant un scintillateur qui comporte un premier agencement d'au moins deux éléments scintillateurs (11) en forme de barre qui peuvent être couplés optiquement l'un avec l'autre par leurs surfaces frontales se faisant face, le premier agencement d'éléments scintillateurs (11) étant entouré coaxialement par un deuxième agencement d'éléments gaine (12) pouvant être reliés entre eux,
**caractérisé en ce que** chaque ensemble d'un élément scintillateur (11), et un élément gaine (12) et deux éléments fenêtre (131, 132) côté frontal forme un module scintillateur (10) qui peut être relié optiquement et mécaniquement à d'autres modules scintillateurs, les éléments fenêtre (131, 132) se raccordant chacun sans soudure aux faces frontales de l'élément scintillateur (11) du module scintillateur et l'élément scintillateur (11) est maintenu, ensemble avec les éléments fenêtre (131, 132), déplaçable axialement dans l'élément gaine (12) contre la force d'au moins un élément ressort (151, 152) agencé coaxial entre l'élément scintillateur (11) et l'élément gaine (12).

2. Dispositif selon la revendication 1, **caractérisé en ce qu'**au moins un module situé à une extrémité de l'agencement est formé par un module détecteur (20) comprenant un capteur de lumière, en particulier un photomultiplicateur (24).

3. Dispositif selon la revendication 2, **caractérisé en ce qu'**au moins un module situé à l'autre extrémité de l'agencement est formé par un module de clôture (30).

4. Dispositif selon la revendication 1, **caractérisé en ce que** l'élément ressort (151, 152) est un ressort spiral dont les extrémités s'appuient sur des collerettes annulaires d'un cylindre intérieur (161, 162) et d'un cylindre extérieur (171, 172).

5. Dispositif selon la revendication 1 à 4, **caractérisé en ce que** le cylindre intérieur (161, 162) présente une première collerette annulaire (161B, 162B) d'extrémité qui maintient l'élément fenêtre (131, 132), sur lequel repose la face frontale de l'élément scintillateur (11), et une deuxième collerette annulaire (161A, 162A) d'extrémité sur laquelle s'appuie une première extrémité de l'élément ressort (151, 152).

6. Dispositif selon la revendication 1 à 4, **caractérisé en ce que** le cylindre extérieur (171, 172) présente une première collerette annulaire (171A, 172A) d'extrémité sur laquelle s'appuie l'autre extrémité de l'élément ressort (151, 152), et une deuxième collerette annulaire (171B, 172B) d'extrémité qui est reliée, en particulier vissée, à une collerette terminale (121, 122) de l'élément gaine (12) au moyen d'éléments de maintien (141, 142).

7. Dispositif selon la revendication 1, **caractérisé en ce que** des anneaux profilés (18) verrouillables côté périphérie chevauchent avec conjugaison de forme les collerettes terminales (121, 122) des éléments gaine (12, 22) de modules voisins, pour une liaison mécanique.

8. Dispositif selon la revendication 1 à 3, **caractérisé en ce que** des éléments de couplage (19) translucides sont insérés entre les éléments fenêtre (131, 132, 231) des modules scintillateurs (10) et du module détecteur (20).

9. Dispositif selon la revendication 2, **caractérisé en ce que** le module détecteur (20) présente un élément scintillateur (21) et un élément gaine (22), qui sont reliés ensemble à une extrémité par l'intermédiaire d'un élément ressort (251), un cylindre intérieur (261) et un cylindre extérieur (262), l'élément scintillateur (21) étant couplé à son autre extrémité par l'intermédiaire d'une fenêtre de détecteur (232), au photomultiplicateur (24) qui est agencé ensemble avec un circuit d'exploitation (25) dans un boitier (23) qui est maintenu sur une collerette terminale (220) de l'élément gaine (22).

10. Dispositif selon la revendication 3, **caractérisé en ce que** le module de clôture (30) consiste en un boîtier (31) avec couvercle (32), boîtier qui peut être relié avec le dernier module scintillateur (10) de l'agencement par l'intermédiaire d'une collerette (311) au moyen d'un anneau profilé (18), et **en ce qu'**un ressort de pression (33) maintenu dans le boîtier (31) presse un élément réflecteur (34) contre la collerette annulaire extérieure (161B) du cylindre intérieur (161) du module scintillateur (10) juxtaposé.

11. Dispositif pour mesurer un rayonnement ionisant selon la revendication 2, **caractérisé en ce qu'**en aval du photomultiplicateur (24) est agencé un circuit d'exploitation (25) qui présente un canal de mesure (251) pour relever, traiter et afficher les impulsions de mesure et un canal de réglage (252) pour le formage d'impulsion et la régulation d'impulsion.

12. Dispositif selon la revendication 11, **caractérisé en ce que** le canal de mesure (251) présente un gain électronique d'environ 30 ainsi qu'une limitation de hauteur d'impulsion.

13. Dispositif selon la revendication 11, **caractérisé en ce que** le canal de réglage (252) abaisse la hauteur d'impulsion d'un facteur de 5-10, par l'intermédiaire d'un diviseur de tension, et commande avec ce signal l'unité haute tension (HV) du photomultiplicateur (24).
